# EUROPEAN PATENT SPECIFICATION

(11) **EP 0 566 231 B1**
(45) Date of publication and mention of the grant of the patent: **15.10.1997**
(21) Application number: 93301165.2
(22) Date of filing: 17.02.1993
(51) Int. Cl.: C01B 25/023

(54) **Process for production of red phosphorus powder**
Verfahren zur Herstellung von pulverigem rotem Phosphor
Procédé de préparation de poudre de phosphore rouge

(30) Priority: 18.02.1992 JP 69002/92
(43) Date of publication of application: 20.10.1993
(73) Proprietor: Rinkagaku Kogyo Company Limited, Shinminato-shi Toyama-ken 934 (JP)
(72) Inventor: Inao, Yoshikazu, c/o Rinkagaku Kogyo Co., Ltd., Shinminato-shi, Toyama (JP); Nojiri, Yasuo, c/o Rinkagaku Kogyo Co., Ltd., Shinminato-shi, Toyama (JP); Shibata, Katsutoshi, c/o Rinkagaku Kogyo Co., Ltd., Shinminato-shi, Toyama (JP)
(74) Representative: Kearney, Kevin David Nicholas

(56) References cited:
- EP-A- 0 249 723

## Description

### FIELD OF THE INVENTION

The present invention relates to a process for production of a red phosphorus powder by the thermal conversion of yellow phosphorus. More particularly, this invention relates to an improved process for production of a red phosphorus powder without the necessity for a pulverizing process.

### BACKGROUND OF THE INVENTION

Hitherto, red phosphorus has been produced by the conversion of yellow phosphorus thereto by heating, i.e., by a so-called thermal conversion reaction.

When yellow phosphorus is heated in an inert gas, a conversion reaction takes place as the temperature rises. This conversion reaction becomes significant at around 260°C. Since the conversion reaction is exothermic, a conventional method is to proceed with the conversion at around 280°C which is the boiling point of yellow phosphorus, while the heat of reaction is controlled.

In the batch process most commonly employed so far, yellow phosphorus is heated in a closed reaction vessel in such a manner that most of the yellow phosphorus is first converted to red phosphorus while the reaction temperature is kept regulated at 260 to 280°C and, subsequently, the reaction mixture is further heated to 300°C or more to completely convert the yellow phosphorus to red phosphorus.

The above procedure is intended to enhance the stability of the red phosphorus by diminishing the residual yellow phosphorus in the red phosphorus thereby to prevent spontaneous ignition which may be caused by residual yellow phosphorus.

The thermal conversion reaction of yellow phosphorus proceeds by the formation of minute nuclei of red phosphorus and by the growth and agglomeration of the nuclei. As the conversion ratio increases, the formation of agglomerate particles is accelerated, the red phosphorus particles become larger rapidly and finally form a solidified mass.

In the batch process, this conversion reaction is continued over a time period as long as from 20 to 30 hours to 100 hours. During this period, high-temperature heat treatment is performed in order to heighten the conversion ratio of yellow phosphorus to red phosphorus and to remove the residual yellow phosphorus. As a result of this treatment, the red phosphorus is obtained as a hard solidified and united mass, therefore, it cannot be used without a mechanical pulverizing process.

In addition to such complete batch conversion processes, a continuous conversion process has been tried in which yellow phosphorus is partly converted to red phosphorus and the unconverted yellow phosphorus is separated by evaporation (see U.S. Patent 2,476,335).

However, since agglomeration of red phosphorus particles proceeds from the initial stage of the conversion reaction, the particles become larger rapidly also in this partial conversion process.

In addition, like the batch process described hereinabove, the continuous process also necessitates high-temperature heat treatment for the removal of residual yellow phosphorus and, hence, the red phosphorus particles further agglomerate.

This continuous conversion process, therefore, cannot yield a red phosphorus powder without also needing a pulverizing process.

It is well known that red phosphorus is useful as a flame retardant for synthetic resins. Recently, however, with the technical diversification and advancement in the synthetic resin industries, there is a growing desire for high-performance resins and, at the same time, quality improvements of red phosphorus flame retardant are also required.

One such quality improvement which is desired is for a red phosphorus fine powder having high stability. It is well known that red phosphorus is relatively unstable and able to decompose by a disproportionation reaction in the presence of a slight amount of water in air.

Since products of the decomposition of red phosphorus significantly impair the properties of synthetic resins, various kinds of stabilizing techniques for pulverized red phosphorus have been proposed so far. Among these is a technique in which the surface of red phosphorus particles is coated by stabilizing substances to inhibit the decomposition reaction. These techniques have had some success.

However, with respect to red phosphorus in the form of fine powders which especially are strongly desired recently, e.g. 10 µm (micrometres) or less of average particle size, the stability improvement has not yet been satisfactorily attained.

In the prior-art techniques described above, a pulverizing process is indispensable for obtaining a red phosphorus fine powder, and it is extremely difficult without low efficiently sieving process to obtain a fine powder of red phosphorus having particles of uniform particle size.

Moreover, since the particles of red phosphorus powder obtained from a pulverizing process have split-off surfaces which are highly reactive and onto which water and other substances are adsorbed very readily, the decomposition reaction of red phosphorus by means of disproportionation reaction is accelerated and, hence, the usefulness of the red phosphorus powder as a flame retardant for synthetic resins is impaired considerably.

The present applicant, before completion of the present invention, proposed a process for production of a red phosphorus powder by a partial conversion method (see EP 0249723 B1).

According to this process, a red phosphorus powder can be obtained without use of a pulverizing process and, unlike the prior-art red phosphorus powders obtained by a pulverizing process, the red phosphorus particles obtained are spherical and have extremely high stability.

However, in the above process also, it is difficult to control the agglomeration of red phosphorus particles during the conversion reaction. Thus, a red phosphorus fine powder having particles of uniform particle size cannot be produced in good yield by the above process.

### SUMMARY OF THE INVENTION

Accordingly, the present invention has the following objects:
(1) to provide an improved process for production of a red phosphorus powder without a pulverizing process;
(2) to provide a process for production of a red phosphorus fine powder in good yield having excellent stability and controlled particle sizes; and
(3) to provide a process for production of a red phosphorus powder which overcomes the technical problem of "reduction of particle size and high stability" that are incompatible in the prior-art processes, and contributes to a quality improvement of red phosphorus flame retardants.

The present invention is characterized in that a thermal conversion reaction is carried out in the presence of a dispersant, and due to this, objects (1) to (3) above have been attained.

That is, the present invention provides a process for production of a red phosphorus powder by the thermal conversion of yellow phosphorus, which comprises carrying out the thermal conversion reaction in the presence of a dispersant.

### DETAILED DESCRIPTION OF THE INVENTION

The present inventors gave attention to the phenomenon that in the production of a red phosphorus powder by a partial conversion process, red phosphorus particles agglomerate and grow rapidly as aggregate particles with the progress of the reaction and, as a result, the particles become larger and agglomerate into a mass.

As a result of studies of methods for control of agglomeration, it has been found that the agglomeration of red phosphorus particles can be controlled when the conversion reaction is carried out in the presence of a certain kind of substance, i.e., "dispersant", and a red phosphorus powder of any desired uniform particle size can be produced in high yield. The present invention has been completed based on this finding.

The term "dispersant" as used herein means a substance which enhances the dispersibility of red phosphorus particles in molten yellow phosphorus thereby to control agglomeration of particles.

Examples of this kind of substance, i.e., dispersant, include (1) various kinds of surfactants, (2) sparingly soluble in water, finely powdered inorganic compounds, (3) inorganic ammonium salts, and (4) organic compounds containing an amino group. Experiments clearly showed that these substances act as useful dispersants.

Although the mechanism of the action of the dispersants has not been elucidated in detail, it can be presumed that the dispersant substance uniformly disperses into the molten yellow phosphorus and acts on red phosphorus nuclei formed in the initial stage of the conversion reaction to control the growing rate of these nuclei and enhance the dispersibility of red phosphorus particles and also to affect the interaction among the particles.

In any event, it is surprising that a red phosphorus powder consisting of fine particles of from several micrometers to 10-odd micrometers can be obtained in good yield by only adding a small amount of a dispersant to the molten yellow phosphorus. This is a completely novel finding made by the present inventors before anybody else.

As the surfactants (1) that can be used as the dispersant in the present invention, various kinds of surfactants may be employed. Examples thereof include an anionic surfactant, a cationic surfactant, an amphoteric surfactant, a nonionic surfactant, and a high-molecular surfactant.

Specific examples of the anionic surfactant include carboxylate surfactants, sulfonate surfactants, sulfate ester surfactants, and phosphate ester surfactants.

Specific examples of the cationic surfactant include inorganic or organic salts of aliphatic amines, quaternary ammonium salts, benzalkonium salts, and imidazolinium salts. Specific examples of the amphoteric surfactant include aminocarboxylate surfactants and betaine surfactants. Specific examples of the nonionic surfactant include ether surfactants, ester surfactants, ether-ester surfactants, and nitrogen compound surfactants.

Further, representative examples of the high-molecular surfactant include polycarboxylate surfactants and naphthalenesulfonic acid-formalin condensates.

Useful examples of the sparingly soluble in water, finely powdered inorganic compounds (2) that can be used as the dispersant in the present invention include metal oxides such as silica, aluminum oxide, titanium oxide, zinc oxide, and magnesium oxide, sparingly soluble salts such as calcium carbonate, aluminum silicate, barium sulfate, calcium sulfate, calcium phosphate, and apatite, and inorganic polymers such as talc, bentonite, kaolin, diatomaceous earth, and clay. It is preferred that each of these sparingly soluble in water, finely powdered inorganic compounds be used as a fine powder having an average particle size of 1 µm (micrometre) or less.

Examples of the inorganic ammonium salts (3) that can be used as the dispersant in the present invention include ammonium sulfate and ammonium chloride. Such inorganic ammonium salts also effectively act as the dispersant in the present invention and, hence, these also are preferred examples of the dispersant.

Examples of the organic compounds containing an amino group (4) that can be used as the dispersant in the present invention include primary, secondary, or tertiary amine compounds, amine salts, quaternary ammonium salts, and derivatives thereof; and amides, e.g., carboxamides, amides of sulfuric esters, and amides of phosphoric esters, and derivatives thereof.

It is preferred that such organic compounds containing an amino group have a boiling point higher than 100°C and are liquid in molten yellow phosphorus.

In the present invention, the aforementioned dispersants (1) to (4) may be added as they are or after being dissolved or dispersed in water or in an organic solvent.

The amount of the dispersant to be added is preferably in the range of from 0.01 to 5%, e.g. 0.1 to 4.7 or preferably 0.45 to 3.5, more preferably 0.5 to 1% by weight of the yellow phosphorus. In most cases, however, a sufficient effect is obtained when the dispersant is used in an amount as small as 1% by weight or less.

Although the effect of the use of a dispersant varies depending on the kind of dispersant, a red phosphorus fine powder of any average particle size can be produced by selecting such conditions as dispersant amount, reaction time, and so forth.

The process for production of a red phosphorus powder according to the present invention will be explained below in more detail. However, the techniques and procedures specified below should not be construed to be limiting the scope of the invention.

As a reaction vessel, a vessel having a lid is used. This vessel is provided with a thermometer, condenser, and stirrer. The lid of the reaction vessel is provided with a detachable heat insulator.

Into the reaction vessel is introduced a proper amount of warm water. (The "warm water" means water having a temperature at which yellow phosphorus can be kept in its molten state; hereinafter every reference to "warm water" has the same meaning.) Subsequently, measured amounts of molten yellow phosphorus and a dispersant are placed in the vessel.

The condenser is connected to a receiver vessel filled with warm water, so that the tip of the condenser is immersed in the warm water in the receiver vessel. Further, the heat insulator is fitted to the lid of the reaction vessel and warm water is passed through the condenser. Thereafter, this reaction vessel is heated by external heating while N₂ gas is flowing into the apparatus.

After all of the water in the reaction vessel has been removed by distillation, the heat insulator on the lid is detached and the reaction vessel is further heated to the conversion temperature. The temperature in the reaction vessel is maintained at about 280°C which is the boiling point of yellow phosphorus, and the conversion reaction is allowed to proceed while evaporated yellow phosphorus is refluxing within this reaction vessel.

When a desired reaction time has elapsed, the lid part is heat-insulated again and the unconverted yellow phosphorus is distilled off. The liquid yellow phosphorus condensed in the condenser is recovered in the receiver vessel containing the warm water.

After almost all of the yellow phosphorus has been distilled off, the reaction vessel is further heated so that the reaction product is heated to a temperature higher than the boiling point of yellow phosphorus, thereby to remove traces of yellow phosphorus remaining in the red phosphorus.

The reaction vessel is then allowed to cool, and thereafter the red phosphorus in a powder form is taken out of the reaction vessel.

The yellow phosphorus recovered from the receiver vessel is recycled as raw material yellow phosphorus.

The red phosphorus powder thus obtained varies in average particle size, particle size distribution, yield, etc., depending on the kind and amount of the dispersant used and on the reaction time.

The larger dispersant amounts generally result in the smaller average particle sizes, while the shorter reaction times result in the lower yields. Although there is a tendency that longer reaction times result in larger average particle sizes, this particle size enlargement is negligible and this particle size is very much smaller than the particle sizes of red phosphorus powders obtained using no dispersant.

If no dispersant is added, agglomeration of particles begins rapidly after the initiation of the conversion reaction, so that it is impossible to obtain a red phosphorus fine powder having an average particle size of no more than several micrometers. In contrast, when the thermal conversion reaction is proceeded according to the process of the present invention, i.e., in the presence of a dispersant, a red phosphorus fine powder having a particle size as low as only several micrometers can be produced with great ease.

In the case of adding no dispersant, the red phosphorus particles not only are large, but also have a wide particle size distribution. In contrast, the red phosphorus according to the present invention is composed of red phosphorus. fine particles and has been controlled to have a narrow particle size distribution. For example, 80% or more of a red phosphorus fine powder having an average particle size of 10 µm (micrometres) or less is composed of fine particles having particle sizes of 20 µm (micrometres) or less.

Table 1 shows an exemplary conversion ratio and average particle size in the case of adding no dispersant and in the case of adding a dispersant, while Table 2 shows an exemplary particle size distribution in each of the two cases.

**TABLE 1**

| Red Phosphorus | Conversion Ratio (%) | Average Particle Size (µm) |
|---|---|---|
| Addition of no dispersant | 34.5 | 43.9 |
| Addition of dispersant⁽¹⁾ | 32.3 | 5.2 |

| | | |
|---|---|---|
| (1): Addition of 0.5% sodium methyltaurate. | | |

**TABLE 2**

| Particle size (µm) | Addition of no dispersant⁽¹⁾ Average particle size 43.9 µm (%) | Addition of dispersant | |
|---|---|---|---|
| | | Average particle size 9.6 µm⁽³⁾ (%) | Average particle size 5.2 µm⁽²⁾ (%) |
| 8 or less | 0.9 | 37.1 | 76.3 |
| 20 or less | 3.3 | 94.5 | 96.9 |
| 32 or less | 24.2 | 99.2 | 99.9 |
| 44 or less | 50.9 | 100.0 | 100.0 |
| 56 or less | 68.0 | | |
| 68 or less | 78.1 | | |
| 80 or less | 83.5 | | |
| 92 or less | 89.5 | | |
| 128 or less | 100.0 | | |

| | | | |
|---|---|---|---|
| (1), (2): The same as in Table 1. | | | |
| (3): Addition of 0.5% oleamide; conversion ratio 31.7%. | | | |
| The average particle sizes were measured with a granulometer model 715 (manufactured- by CILAS ALCATEL, France). | | | |

Thus, according to the present invention, a red phosphorus powder having any desired average particle size can be obtained in a conversion ratio as high as from 30 to 80%, by suitably selecting the kind and amount of dispersant and conversion conditions.

The particles of red phosphorus powder obtained by the process of the present invention are relatively uniform and, hence, have a sharp particle size distribution unlike the conventional pulverized red phosphorus powders which have broad particle size distributions.

From observation of this red phosphorus fine powder with an electron microscope, it was ascertained that the powder consisted of spherical single particles and of agglomerate particles composed of spherical particles.

This fact clearly indicates that agglomeration of particles has been effectively controlled in the red phosphorus fine powder obtained by the process of the present invention.

Furthermore, it was also ascertained from the results of a stability measurement that red phosphorus fine powders of the present invention, composed of spherical particles, show extremely high stability as compared with conventional pulverized red phosphorus powders and are very useful as a flame retardant for high-performance resins.

The present invention is described below in greater detail with reference to Examples 1 to 30 according to the present invention and Comparative Examples 1 to 5.

### EXAMPLE 1

Into a reaction vessel made of iron (155 mm (inside diameter) × 130 mm (height)) was introduced 1 liter of warm water having a temperature of about 60°C, followed by 990 g of molten yellow phosphorus and 19 g of a sodium methyltaurate surfactant (Lipotack TE-P, manufactured by Lion Corp., Japan; sodium methyltaurate content 26% = 4.9 g) (0.5% of surfactant based on phosphorus).

This reaction vessel was covered with a lid and a glass-wool heat insulator covering was fitted to the lid. The reaction vessel was then set on an electric heater.

Subsequently, N₂ gas was passed through the reaction vessel at a rate of 1.0 NL/min and warm water of about 60°C was allowed to flow through the jacket of the condenser.

The heater was switched on to heat the reaction vessel, thereby to distill off the water first. The water removal by distillation was completed at a temperature around 100°C. Then, the heat insulator covering on the lid was detached and heating was continued further to raise the temperature.

After the temperature had reached about 280°C, heating was continued further for about 8 hours while the heater was kept being controlled so that the reaction mixture was maintained at that temperature and the yellow phosphorus was refluxed within the reaction vessel.

Thereafter, the heat insulator covering was fitted again and N₂ gas was introduced at an increased rate of 4.0 NL/min, thereby to distill off the unconverted yellow phosphorus. After almost all of the yellow phosphorus had been distilled off, the residue was heated to 280°C or more and heating was continued at a temperature not higher than 330°C for about 4 hours, thereby the slight amount of yellow phosphorus remaining in the residue was removed.

After cooling, 320 g of red phosphorus fine particles was obtained. This red phosphorus fine powder had an average particle size of 5.2 µm. The conversion ratio was 32.3%.

The kind and amount of the dispersant used in this Example 1, the average particle size of the red phosphorus fine powder obtained, and the conversion ratio are summarized in Table 3.

### EXAMPLES 2 TO 26

Into the same reaction vessel as that used in Example 1 were introduced about 1 kg of yellow phosphorus and each of the various dispersants as shown in Tables 3 and 4. Conversion reaction was then carried out under the same conditions as in Example 1 (except that in Examples 9 and 11 only, the reaction time was increased to 12 hours).

Of the dispersants shown in Tables 3 and 4, the organic compounds which are sparingly soluble in water were added after being dissolved in a suitable organic solvent.

The kinds and amounts of the dispersants used, the average particle sizes of the red phosphorus fine powders obtained, and the conversion ratios are summarized in Table 3 (Examples 2 to 15) and Table 4 (Examples 16 to 26).

The average particle sizes of red phosphorus fine powders as shown in Tables 3 and 4 were measured with a granulometer model 715 (manufactured by CILAS ALCATEL, France).

**TABLE 3**

| [Examples 1 to 15] | | | | |
|---|---|---|---|---|
| Example | Dispersant | Dispersant amount (w/w) (%) | Conversion ratio (w/w) (%) | Average particle size (µm) |
| 1 | A-1 | 0.5 | 32.3 | 5.2 |
| 2 | A-2 | 0.1 | 33.0 | 15.5 |
| 3 | A-3 | 4.7 | 45.3 | 16.9 |
| 4 | A-4 | 3.1 | 40.1 | 8.7 |
| 5 | B-1 | 0.3 | 33.0 | 5.2 |
| 6 | B-2 | 1.8 | 36.4 | 7.2 |
| 7 | C | 0.1 | 29.2 | 6.4 |
| 8 | D-1 | 0.5 | 23.7 | 1.7 |
| *9 | D-1 | 2.2 | 68.5 | 10.6 |
| 10 | D-2 | 0.8 | 33.0 | 6.9 |
| *11 | D-2 | 3.5 | 70.6 | 15.0 |
| 12 | D-3 | 0.5 | 34.0 | 7.3 |
| 13 | D-4 | 0.5 | 34.6 | 4.5 |
| 14 | D-5 | 0.5 | 39.8 | 3.9 |
| 15 | D-6 | 0.1 | 31.3 | 5.2 |

| | | | | |
|---|---|---|---|---|
| [*]; In Examples 9 and 11, the reaction time was 12 hours. | | | | |

**TABLE 4**

| [Examples 16 to 26] | | | | |
|---|---|---|---|---|
| Example | Dispersant | Dispersant amount (w/w) (%) | Conversion ratio (w/w) (%) | Average particle size (µm) |
| 16 | E-1 | 1.0 | 32.3 | 18.8 |
| 17 | E-2 | 1.0 | 35.8 | 22.4 |
| 18 | F-1 | 1.0 | 36.5 | 12.6 |
| 19 | F-2 | 1.0 | 34.0 | 20.2 |
| 20 | G-1 | 0.5 | 35.0 | 16.0 |
| 21 | G-2 | 0.5 | 37.2 | 4.8 |
| 22 | G-3 | 0.5 | 30.3 | 9.2 |
| 23 | G-4 | 0.5 | 32.1 | 6.2 |
| 24 | G-5 | 0.5 | 31.7 | 9.6 |
| 25 | G-6 | 0.5 | 35.5 | 9.1 |
| 26 | G-7 | 0.5 | 31.6 | 5.5 |

Dispersants A-1 to 4, B-1 and 2, C, and D-1 to 6 in Table 3 indicate the following surfactants, respectively. The words within the parentheses below are trade names of Lion Corp., Japan.
A: Anionic Surfactants
   - A-1:: Methyltaurate (Lipotack TE-P)
   - A-2:: Alkylbenzenesulfonate (Lipon LS-625)
   - A-3:: Alkyl ether sulfate ester (Sunnol DM-1470)
   - A-4:: Phosphate ester (Lipofak PN-529)
B: Cationic Surfactants
   - B-1:: Polyoxyethylene quaternary ammonium chloride (Ethoquat O/12)
   - B-2:: Aliphatic amine acetate (Armak T-50)
C: Amphoteric Surfactant of Imidazolinium betaine Type (Lipomine CH)
D: Nonionic Surfactants
   - D-1:: Alkylol amide (Homelead CD)
   - D-2:: Polyoxyethylene fatty acid ester (Ethofat 0/15)
   - D-3:: Polyoxyethylene nonylphenol ether (Liponox NC-130)
   - D-4:: Polyoxyethylene alkylamide (Ethomide O/15)
   - D-5:: Polyoxyethylene alkylamine (Ethomeen C/12)
   - D-6:: Sorbitan fatty acid ester (Cadenax SO-80C)

   Dispersants E-1 and 2, F-1 and 2, and G-1 to 7 in Table 4 indicate the following substances, respectively.
E: Inorganic Ammonium Salts
   - E-1:: Ammonium sulfate
   - E-2:: Ammonium chloride
F: Sparingly Soluble In Water, Finely Powdered Inorganic Compounds
   - F-1:: Aluminum oxide (manufactured by Nippon Aerosil Co., Ltd., Japan; average particle size 0.02 µm)
   - F-2:: Talc (manufactured by Nippon Talc Co., Ltd., Japan; average particle size 0.5 µm)
G: Organic Amine Compounds
   - G-1:: Octylamine
   - G-2:: 4,4'-Diaminodiphenylmethane
   - G-3:: p-Phenylenediamine
   - G-4:: Triethylbenzylammonium chloride
   - G-5:: Oleamide
   - G-6:: Benzenesulfonamide
   - G-7:: Diphenyl phosphoroamidate

### EXAMPLES 27 TO 30

Using the same dispersant as that used in Examples 10 and 11, the same procedures as in Example 1 were carried out except that the amount of the dispersant added and the conversion time were changed as shown in Table 5.

The average particle size of the thus-obtained red phosphorus fine powders and the conversion ratio are summarized in Table 5 along with the results of Examples 10 and 11 which were shown in Table 1 given above.

These Examples 27 to 30, together with Examples 10 and 11, were for measuring "the changes of conversion ratio and average red phosphorus particle size resulting from changing dispersant amount and conversion time".

**TABLE 5**

| [Examples 27 to 30] | | | | |
|---|---|---|---|---|
| Example | Dispersant amount (w/w) (%) | Conversion time (Hr) | Conversion ratio (w/w) (%) | Average particle size (µm) |
| 27 | 0.47 | 4 | 19.8 | 12.6 |
| 28 | 0.60 | 8 | 30.0 | 15.0 |
| (10) | (0.80) | (8) | (33.0) | (6.9) |
| 29 | 0.97 | 4 | 15.8 | 4.2 |
| 30 | 1.00 | 8 | 33.8 | 7.5 |
| (11) | (3.50) | (12) | (70.6) | (15.0) |

### COMPARATIVE EXAMPLES 1 TO 5

Conversion reaction was carried out in the same manner as in Example 1 except that no dispersant was added and the conversion time was changed as shown in Table 6.

The conversion time, conversion ratio and average red phosphorus particle size are summarized in Table 6.

For the purpose of comparison, a red phosphorus powder was produced under the same conversion conditions as in Example 1 except that no dispersant was added. The average particle size of the thus-obtained red phosphorus powder and the conversion ratio are shown also in Table 6.

This Comparative Example 5 corresponds to a blank test for Example 1 given above and, at the same time, is one of the tests, including Comparative Examples 1 to 4 above, which were for measuring "the changes of conversion ratio and average red phosphorus particle size following the change of conversion time".

**TABLE 6**

| [Comparative Examples 1 to 5] | | | |
|---|---|---|---|
| Comparative Example | Conversion time (min) | Conversion ratio (w/w) (%) | Average particle size (µm) |
| 1 | 10 | 1.9 | 7.9 |
| 2 | 30 | 3.9 | 29.2 |
| 3 | 120 | 18.5 | 33.5 |
| 4 | 240 | 34.5 | 43.9 |
| 5 | 480 | 45.3 | 51.6 |

For evaluation of the stability of red phosphorus, the red phosphorus obtained in Comparative Example 5 (average particle size, 51.6 µm) was pulverized into red phosphorus fine powders (average particle sizes; 20 µm and 5 µm, respectively), and the stability of these red phosphorus fine powders and the red phosphorus fine powders of Examples 1, 10, 21, and 24 were measured in terms of the amount of phosphine generated. The results obtained are summarized in Table 7.

**TABLE 7**

| [Average particle size, Stability] | | |
|---|---|---|
| Red Phosphorus | Average particle size (µm) | Amount of phosphine generated (µg/g) |
| Pulverized red phosphorus | 20.0 | 945.0 |
| Pulverized red phosphorus | 5.0 | 1615.0 |
| Example 1 | 5.2 | 40.1 |
| Example 10 | 6.9 | 34.2 |
| Example 21 | 4.8 | 36.6 |
| Example 24 | 9.6 | 35.3 |

The method for measuring the generated phosphine amounts in Table 7 is as follows.

10 g of a red phosphorus sample is placed in a 200-ml Erlenmeyer flask, which is then sealed by a stopper having two gas-passing tubes.

One of the gas-passing tubes is connected to an N₂ gas container, the other to a gas collector vessel. N₂ gas is then introduced to sufficiently replace the inside of the Erlenmeyer flask with the gas.

This Erlenmeyer flask is then immersed in a 190°C oil bath and maintained at this temperature for 3 hours, and any gas that is evolved during this time period is collected.

From the collected gas, a portion of 100 ml is separated using a syringe. The hydrogen phosphide concentration in the separated gas is measured with a hydrogen phosphide detector (manufactured by Komei Rikagaku Kogyo Inc., Japan) and the amount of the hydrogen phosphide generated is calculated from the amount of the gas evolved.

As apparent from Tables 3 and 4, a red phosphorus fine powder having an average particle size of from several to 20-odd micrometers was able to be obtained in each of Examples 1 to 26 in which various kinds of surfactants, inorganic ammonium salts, sparingly soluble in water, finely powdered inorganic compounds and organic amines were added as a dispersant.

It can also be seen that a red phosphorus fine powder having any desired average particle size can be produced by suitably selecting the kind and amount of dispersant and conversion conditions (reaction time).

Further, the columns of conversion ratio in Tables 3 and 4 show that red phosphorus fine powders are obtained in high yields. In particular, comparisons between Examples 8 and 9 and between Examples 10 and 11 show that the conversion ratio is improved greatly by increasing the amount of the dispersant and prolonging the conversion time.

The above fact is also made clear in Table 5.

In contrast, in Comparative Examples 1 to 5 in which no dispersant was added, as apparent from Table 6, prolonging the conversion time heightened the conversion ratios, though at the same time, the average particle size of the red phosphorus particles also increased rapidly. For example, it can be understood that a red phosphorus powder of 30 pm or larger is obtained when the conversion time is 120 minutes (see Comparative Example 3), this powder should be pulverized in order to obtain therefrom a red phosphorus fine powder of from several to 20-odd micrometers.

In Example 1 in which a dispersant was added and the conversion time was 8 hours (480 minutes) which was the same as that in Comparative Example 5, a red phosphorus fine powder having an average particle size of 5.2 µm was obtained. On the other hand, Comparative Example 5 gave a red phosphorus powder of 51.6 µm and this powder is, of course, required to be pulverized in order to obtain a red phosphorus fine powder of from several to 20-odd micrometers.

If a red phosphorus fine powder is to be obtained without adding a dispersant and without pulverizing, it is necessary to cease the reaction at about several minutes after the initiation of the reaction. This, however, results in an extremely low conversion ratio, so that it is difficult to utilize as a practical method.

Moreover, as apparent from Table 7, there is a considerable difference in stability between red phosphorus fine powders obtained by pulverizing and the red phosphorus fine powders shown in Examples of the present invention which are obtained without a pulverizing process.

As Table 7 shows, the phosphine amounts generated from the red phosphorus fine powders of below 10 µm obtained by the present invention are from 34 to 40 µg/g, whereas the phosphine amounts generated from the pulverized red phosphorus were extremely high namely, 945 µg/g and 1,615 µg/g when the average particle sizes were 20 µm and 5 µm, respectively.

It can be understood from the above facts that red phosphorus fine powders of from several to 20-odd micrometers can be obtained without the use of a pulverizing process and red phosphorus fine powders having extremely high surface stability can be obtained in high conversion ratios in Examples 1 to 26 according to the present invention in which the thermal conversion reaction is conducted in the presence of a dispersant.

As described above, the process of the present invention is characterized in that in production of red phosphorus by the thermal conversion of yellow phosphorus, the thermal conversion reaction is carried out in the presence of a dispersant. Due to this, a red phosphorus powder can be produced without the need for a pulverizing process and, a red phosphorus powder which is composed of red phosphorus particles having almost no split-off surfaces and having extremely high surface stability can be produced in high conversion.

Further, the present invention is able to produce a red phosphorus powder having a regulated and any desired average particle size in the range of, for example, from several micrometers to 20-odd micrometers, by suitably selecting the kind and amount of dispersant and reaction conditions (conversion time).

Furthermore, since stable red phosphorus fine powders which are less liable to suffer decomposition or denaturation by disproportionation reaction can be obtained according to the present invention, red phosphorus fine powders having excellent suitability as a flame retardant for high-performance resins can be provided.

While the invention has been described in detail and with reference to specific embodiments thereof, it will be apparent to one skilled in the art that various changes and modifications can be made therein without departing from the scope thereof as defined in the following claims.

## Claims

1. A process for the production of red phosphorus powder by the thermal conversion of yellow phosphorus, characterised in that the thermal conversion reaction is carried out in the presence of a dispersant.

2. A process for obtaining a fine powder of red phosphorus characterised in that it comprises heating yellow phosphorus at the boiling point thereof in the presence of a dispersant thereby to partly convert the yellow phosphorus to red phosphorus and removing the unconverted yellow phosphorus by evaporation.

3. A process as claimed in claim 1 or claim 2, characterised in that the dispersant is a surfactant.

4. A process as claimed in claim 1 or claim 2, characterised in that the dispersant is sparingly soluble in water, and is a finely powdered inorganic compound having an average particle size of 1 µm or less.

5. A process as claimed in claim 1 or claim 2, characterised in that the dispersant is an inorganic ammonium salt or an organic compound containing an amino group.

6. A process as claimed in any one of claims 1 to 5 characterised in that the thermal conversion reaction is carried out in the presence of from 0.01 to 5% by weight of the dispersant based on the amount of the yellow phosphorus.

7. A process for obtaining a red phosphorus fine powder characterised in that it comprises heating yellow phosphorus at the boiling point thereof in the presence of a dispersant thereby to partly convert the yellow phosphorus to red phosphorus and removing the unconverted yellow phosphorus by evaporation, the said red phosphorus powder consisting of spherical particles and/or aggregates of the said spherical particles which have an average particle size of 10µm or less and 80% by weight or more of which have a particle size of 20µm or less and being less liable to undergo a disproportionation reaction; wherein the dispersant is a surfactant, or an organic compound containing an amino group or a finely divided inorganic compound, which has an average particle size of 1µm or less and which is sparingly soluble in water, or an inorganic ammonium salt; and wherein the thermal conversion reaction proceeds in the presence of from 0.01 to 5% by weight of the dispersant based on the amount of the yellow phosphorus.

## Patentansprüche

1. Verfahren zur Herstellung von rotem Phosphorpulver durch thermische Umwandlung von gelbem Phosphor, **dadurch gekennzeichnet, daß** die thermische Umwandlungsreaktion in der Anwesenheit eines Dispersionsmittels durchgeführt wird.

2. Verfahren für das Erhalten eines feinen Pulvers aus rotem Phosphor, **dadurch gekennzeichnet, daß** es ein Erhitzen von gelbem Phosphor am Siedepunkt davon während der Anwesenheit eines Dispersionsmittels umfaßt, um dabei den gelben Phosphor teilweise in roten Phosphor umzuwandeln, und ein Entfernen des nicht umgewandelten gelben Phosphors durch Verdampfung umfaßt.

3. Verfahren nach Anspruch 1 oder Anspruch 2, **dadurch gekennzeichnet, daß** das Dispersionsmittel ein grenzflächenaktiver Stoff ist.

4. Verfahren nach Anspruch 1 oder Anspruch 2, **dadurch gekennzeichnet, daß** das Dispersionsmittel in Wasser schwer löslich ist und eine feine pulverförmige, anorganische Masse mit einer mittleren Teilchengröße von 1 µm oder weniger ist.

5. Verfahren nach Anspruch 1 oder Anspruch 2, **dadurch gekennzeichnet, daß** das Dispersionsmittel ein anorganisches Ammoniumsalz oder eine organische Masse, die eine Aminogruppe enthält, ist.

6. Verfahren nach irgendeinem der Ansprüche 1 bis 5, **dadurch gekennzeichnet, daß** thermische Umwandlungsreaktion in der Anwesenheit von 0,01 bis 5 Gewichtsprozent des Dispersionsmittels basierend auf dem Anteil von gelben Phosphor ausgeführt wird.

7. Verfahren für das Erhalten eines feinen roten Phosphorpulvers, **dadurch gekennzeichnet, daß** es ein Erhitzen von gelbem Phosphor am Siedepunkt davon in der Anwesenheit eines Dispersionsmittels, um dabei den gelben Phosphor zu rotem Phosphor teilweise umzuwandeln, und ein Entfernen des nicht umgewandelten gelben Phosphors durch Verdampfung umfaßt, wobei das rote Phosphorpulver aus kugelförmigen Teilchen und/oder Anhäufungen der kugelförmigen Teilchen besteht, die eine mittlere Teilchengröße von 10 µm oder weniger haben und von denen 80 Gewichtsprozent oder mehr eine Teilchengröße von 20 µm oder weniger haben und weniger dazu neigen, sich einer Disproportionierungsreaktion zu unterziehen; wobei das Dispersionsmittel ein grenzflächenaktiver Stoff oder eine organische Masse, die eine Aminogruppe enthält, oder eine fein geteilte anorganische Masse, die eine mittlere Teilchengröße von 1 µm oder weniger hat und in Wasser schwer löslich ist, oder ein anorganisches Ammoniumsalz ist; und bei dem die thermische Umwandlungsreaktion in der Anwesenheit von 0,01 bis 5 Gewichtsprozent von Dispersionsmittel basierend auf dem Anteil an gelben Phosphor stattfindet.

## Revendications

1. Procédé de production de poudre de phosphore rouge par conversion thermique de phosphore jaune, caractérisé en ce qu'on effectue la réaction de conversion thermique en présence d'un dispersant.

2. Procédé d'obtention d'une poudre fine de phosphore rouge, caractérisé en ce qu'il consiste à chauffer du phosphore jaune à son point d'ébullition en présence d'un dispersant de façon à convertir partiellement le phosphore jaune en phosphore rouge et à éliminer le phosphore jaune qui n'est pas converti par évaporation.

3. Procédé selon la revendication 1 ou 2, caractérisé en ce que le dispersant est un tensioactif.

4. Procédé selon la revendication 1 ou 2, caractérisé en ce que le dispersant est modérément soluble dans l'eau et qu'il est un composé minéral finement pulvérulent ayant une granulométrie moyenne de 1 µm ou moins.

5. Procédé selon la revendication 1 ou 2, caractérisé en ce que le dispersant est un sel d'ammonium minéral ou un composé organique contenant un groupe amino.

6. Procédé selon l'une quelconque des revendications 1 à 5, caractérisé en ce qu'on effectue la réaction de conversion thermique en présence de 0,01 à 5% en poids du dispersant, basé sur la quantité de phosphore jaune.

7. Procédé d'obtention de poudre fine de phosphore rouge, caractérisé en ce qu'il consiste à chauffer du phosphore jaune à son point d'ébullition en présence d'un dispersant de façon à convertir partiellement le phosphore jaune en phosphore rouge et à éliminer par évaporation le phosphore jaune qui n'est pas converti, ladite poudre de phosphore rouge étant constituée de particules sphériques et/ou agrégats desdites particules sphériques ayant une granulométrie moyenne de 10 µm ou moins et dont 80% en poids ou plus ont une granulométrie moyenne de 20 µm ou moins et étant moins susceptibles de subir une réaction de dismutation ; le dispersant étant un tensioactif ou un composé organique contenant un groupe amino ou un composé minéral finement divisé qui a une granulométrie moyenne de 1 µm ou moins et qui est modérément soluble dans l'eau ou un sel d'ammonium minéral ; et la réaction de conversion thermique ayant lieu en présence de 0,01 à 5% en poids du dispersant, basé sur la quantité de phosphore jaune.
